# EUROPÄISCHE PATENTSCHRIFT

(11) **EP 0 938 769 B1**
(45) Veröffentlichungstag und Bekanntmachung des Hinweises auf die Patenterteilung: **11.07.2001**
(21) Anmeldenummer: 97909368.9
(22) Anmeldetag: 08.10.1997
(51) Int. Cl.: H02K 41/02

(54) **OPTISCHE POSITIONSMESSEINRICHTUNG**
OPTICAL POSITION-MEASUREMENT DEVICE
DISPOSITIF DE MESURE DE POSITION OPTIQUE

(30) Priorität: 13.11.1996 DE 19646771
(43) Veröffentlichungstag der Anmeldung: 01.09.1999
(73) Patentinhaber: Dr. Johannes Heidenhain GmbH, 83292 Traunreut (DE)
(72) Erfinder: BRAASCH, Jan, D-83308 Trostberg (DE); ALLGÄUER, Michael, D-83371 Stein (DE); CALLIMICI, Christian, D-83714 Miesbach (DE)
(86) Internationale Anmeldenummer: EP9705520
(87) Internationale Veröffentlichungsnummer: WO9821810

(56) Entgegenhaltungen:
- EP-A- 0 423 533
- EP-A- 0 425 937
- US-A- 5 334 892
- US-A- 5 648 690
- PATENT ABSTRACTS OF JAPAN vol. 012, no. 412 (E-676), 31.Oktober 1988 & JP 63 148855 A (ADVANTEST CORP), 21.Juni 1988,
- PATENT ABSTRACTS OF JAPAN vol. 006, no. 170 (E-128), 3.September 1982 & JP 57 085570 A (MATSUSHITA ELECTRIC IND CO LTD), 28.Mai 1982,

## Beschreibung

Die vorliegende Erfindung betrifft eine optische Positionsmeßeinrichtung, die insbesondere in Verbindung mit Antrieben zur präzisen Positionierung einsetzbar ist.

In der Halbleiterfertigung werden zur präzisen Relativ-Positionierung verschiedener Bauteile oft Linearmotoren unterschiedlicher Bauart als Antriebe eingesetzt; mögliche Einsatzgebiete hierbei sind etwa das Wafer-Handling oder aber das sogenannte Wafer-Probing. Soll dabei ein bewegliches Bauteil nicht nur in einer Dimension, sondern in einer Ebene positioniert werden, so resultieren bestimmte Anforderungen an die verwendeten Meßsysteme, über die die jeweiligen Verschiebungen in den unterschiedlichen Koordinatenrichtungen erfaßt werden. Neben der Erfassung von Verschiebebewegungen in zwei Koordinatenrichtungen ist zudem oft gefordert, Drehbewegungen der zu positionierenden Bauteile um bestimmte Achsen zu detektieren. Bekannt ist hierbei etwa aus der US 4,654,571 für jede Verschiebungsachse ein separates Interferometer vorzusehen. Neben Problemen hinsichtlich eines beschränkten Meßbereiches, Abschatten der Meßstrahlengänge etc. ergibt sich insbesondere ein relativ großer Aufwand aufgrund der derzeitigen hohen Kosten pro Interferometer.

Daneben gibt es Ansätze, die bei den hierfür verwendeten Linearmotoren üblicherweise vorhandene, periodische Struktur der Statoreinheit neben der Erzeugung der Antriebsbewegung auch zu Meßzwecken zu nutzen. Je nach Ausführung des eingesetzten Linearmotors kann es sich bei diesen Strukturen um zweidimensional angeordnete, zahnartige Weicheisenstrukturen oder aber um periodisch angeordnete Permanentmagnete unterschiedlicher bzw. gleicher Polarität handeln. So ist etwa bekannt, diese Strukturen mit Hilfe von magnetfeldempfindlichen Elementen oder aber entsprechenden Spulenanordnungen abzutasten, um verschiebungsabhängig modulierte Abtastsignale zu erzeugen. Die zur Erzeugung der Antriebsbewegung verwendeten periodischen Strukturen weisen dabei minimale Teilungsperioden in der Größenordnung einiger mm auf. Bezüglich der der resultierenden Abtastsignale ergibt sich damit eine maximal erreichbare Auflösung, die für Präzisionsanwendungen mitunter nicht ausreicht.
Zur Steigerung der Meßgenauigkeit bzw. Auflösung bietet sich deshalb an, einen bekannten Glas-Teilungsträger mit einer darauf aufgebrachten Meßteilung zwischen den beweglichen Antriebseinheiten anzuordnen, also beispielsweise ein kommerzielles Kreuzgitter-Meßsystem in einen derartigen Antrieb zu integrieren. An der relativ zur Kreuzgitter-Meßteilung beweglichen Antriebs-Einheit sind ein oder mehrere geeignete Abtasteinheiten angeordnet, über die eine optische Abtastung der Meßteilung und eine entsprechende Bestimmung der Position inclusive interessierender Verdrehwinkel in bekannter Art und Weise erfolgen kann. Prinzipiell ließe sich derart eine Auflösung bei der Positionsbestimmung erreichen, die auch für Präzisionsanwendungen ausreicht, da ein derartiges Kreuzgitter mit Teilungsperioden gefertigt werden kann, die deutlich unter dem mm-Bereich liegen. Im Fall von Schrittmotoren mit periodischen Weicheisenstrukturen hängt die erzielbare Vortriebskraft jedoch empfindlich vom Abstand zwischen dem Stator und der beweglichen Antriebseinheit bzw. dem Läufer ab. Wird ein bestimmter Abstand zwischen den beiden zueinander beweglichen Antriebs-Einheiten überschritten, so ist die Erzeugung einer Antriebsbewegung nicht mehr möglich. Dies ist der Fall, wenn der erwähnte Glas-Teilungsträger eines kommmerziellen Kreuzgitter-Meßsystems in einer Dicke von einigen Millimetern zwischen den beiden beweglichen Einheiten des Schrittmotors angeordnet ist.

Aus der US 5334892 ist ferner eine Linearmotoranordnung zur Positionierung in einer Ebene bekannt. Zur Positionsbestimmung ist in einer vorgeschlagenen Ausführungsform vorgesehen, über der statorseitigen, periodischen Struktur einen geeigneten Teilungsträger für ein optisches Messsystem anzubringen. Wird ein derartiger Teilungsträger nunmehr hinreichend dünn ausgebildet, so ist in der vorgeschlagenen Anordnung nicht a priori sichergestellt, dass der jeweilige Teilungsträger hochexakt planar angeordnet werden kann. Eine nicht exakt planare Anordnung des Teilungsträgers hat jedoch unerwünschte Fehler bei der Positionsbestimmung zur Folge.

Aufgabe der vorliegenden Erfindung ist es daher, eine optische Positionsmeßeinrichtung zu schaffen, über die insbesondere in Verbindung mit Antrieben zur präzisen Positionierung verschiedener Elemente eine genaue Bestimmung der Relativposition dieser Elemente möglich ist. Die Funktionsweise des jeweiligen Antriebstyps soll von der zusätzlichen Positionsmeßeinrichtung dabei nicht beeinflußt werden. Zudem ist ein möglichst einfacher Aufbau einer derartigen Positionsmeßeinrichtung gefordert.

Diese Aufgabe wird gelöst durch eine optische Positionsmeßeinrichtung mit den Merkmalen des Anspruches 1.

Vorteilhafte Ausführungsformen der erfindungsgemäßen optischen Positionsmeßeinrichtung ergeben sich aus den Maßnahmen in den abhängigen Ansprüchen.

Aufgrund der Ausbildung der Meßteilung als integraler Bestandteil einer der beiden relativ zueinander beweglichen Antriebseinheiten ist nunmehr sichergestellt, daß der Abstand zwischen den beiden Antriebseinheiten so gewählt werden kann, daß ein Zusammenwirken der beiden Antriebseinheiten zur Erzeugung einer definierten Relativbewegung mit einem hohen Wirkungsgrad möglich ist. Damit ist auch ein Funktionieren von Schrittmotoren gewährleistet, die relativ abstandssensibel arbeiten. Beispielsweise können auch Schrittmotoren mit Weicheisenstatoren mit der erfindungsgemäßen optischen Positionsmeßeinrichtung ausgerüstet werden, ohne deren Funktionsweise zu beeinträchtigen. Gleichzeitig ist die gewünschte hohe Auflösung bei der Positionsbestimmung sichergestellt, wenn optische Meßteilungen mit Teilungsperioden im µm-Bereich eingesetzt werden.

Hinsichtlich der Ausbildung der Antriebseinheit mit der zugeordneten Meßteilung existieren erfindungsgemäß diverse Möglichkeiten. Beispielsweise kann die Meßteilung direkt auf einer planarisierten Oberfläche einer Antriebs-Statoreinheit oder Teilbereichen davon angeordnet werden. Alternativ ist auch möglich, die Meßteilung auf einem Teilungsträger aufzubringen, der wiederum auf der planarisierten Oberfläche einer Antriebs-Statoreinheit angeordnet wird. Eine Reihe verschiedener Ausführungs-Varianten sind in den Unteransprüchen angegeben.

Die erfindungsgemäße optische Positionsmeßeinrichtung kann dabei sowohl zur Messung eindimensionaler Verfahrbewegungen eingesetzt werden wie auch zur Bestimmung von Verfahrbewegungen und/oder Verdrehbewegungen bei Positionierungsaufgaben in einer Ebene. Insbesondere im letztgenannten Fall erweist sich als vorteilhafte Maßnahme, zwischen den beiden beweglich zueinander angeordneten Antriebseinheiten Luftlager vorzusehen, so daß ein reibungsfreies Positionieren möglich ist.

Eine vorteilhafte Ausführungsform gemäß Anspruch 7 ergibt sich dann, wenn mehrere erfindungsgemäß aufgebaute Antriebs-Statoreinheiten unmittelbar benachbart zueinander angeordnet werden und die Abtastung über zwei separate Abtasteinheiten vorgenommen wird, die an einem gemeinsamen Schlitten angeordnet sind. Eine derartige Ausführung der erfindungsgemäßen Positionsmeßeinrichtung erweist sich insofern günstig, als damit auch größere Verfahrbewegungen erfaßt werden können und gleichzeitig nur die Fertigung relativ kompakter Antriebs-Statoreinheiten erforderlich ist. Grundsätzlich kann bei einem derartigen modularen Aufbau der Antriebs-Statoreinheiten auch lediglich eine einzige Abtasteinheit vorgesehen werden, wenn bestimmte Anforderungen an die Stoßstellen aneinandergrenzender Antriebs-Statoreinheiten erfüllt sind.

Weitere Vorteile sowie Einzelheiten der erfindungsgemäßen optischen Positionsmeßeinrichtung ergeben sich aus der nachfolgenden Beschreibung von Ausführungsbeispielen anhand der beiliegenden Zeichnungen.

Dabei zeigt
- Figur 1a: die Draufsicht auf einen Ausschnitt einer ersten, schematisiert dargestellten Ausführungsform der erfindungsgemäßen optischen Positionsmeßeinrichtung;
- Figur 1b: eine seitliche Schnittansicht der erfindungsgemäßen Positionsmeßeinrichtung aus Figur 1 a;
- Figur 2: eine seitliche Schnittansicht einer zweiten, schematisiert dargestellten Ausführungsform der Antriebs-Statoreinheit der erfindungsgemäßen optischen Positionsmeßeinrichtung;
- Figur 3a und 3b: zwei Ansichten einer dritten Ausführungsform der Antriebs-Statoreinheit der erfindungsgemäßen optischen Positionsmeßeinrichtung;
- Figur 4: eine weitere Variante der erfindungsgemäßen Positinsmeßeinrichtung mit zwei aneinander stoßenden stationären Antriebseinheiten.

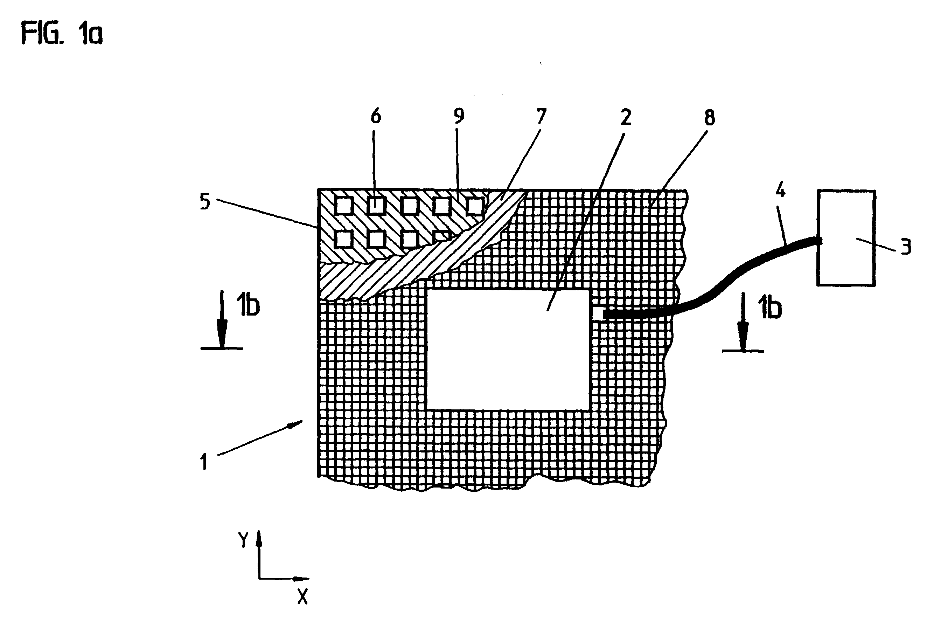

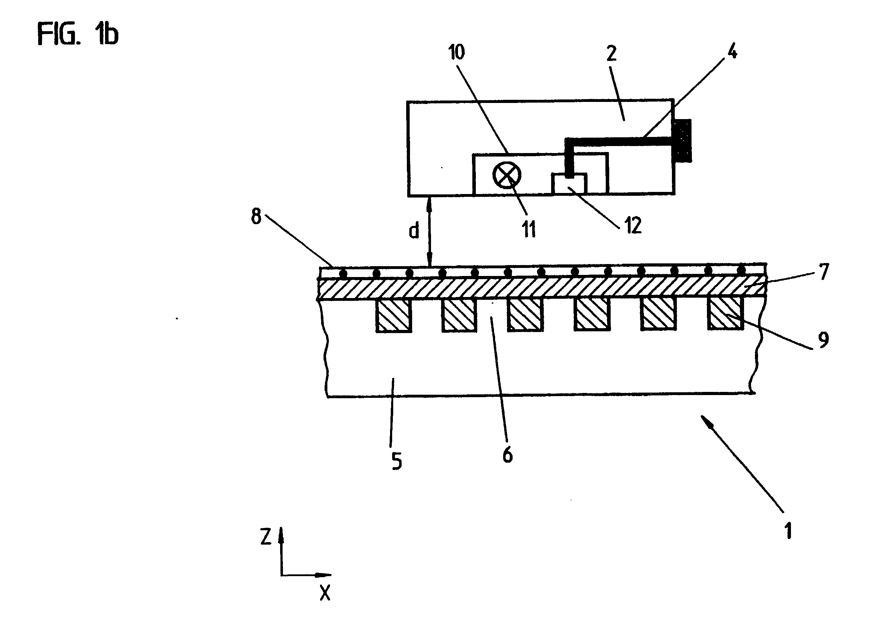

Eine erste Ausführungsform der erfindungsgemäßen optischen Positionsmeßeinrichtung ist in Figur 1a in einer schematisierten Darstellung in Draufsicht teilweise gezeigt. Eine seitliche Schnittdarstellung dieses ersten Ausführungsbeispiels entlang der in Figur 1a eingezeichneten Schnittlinie zeigt Figur 1b.
Das dargestellte Ausführungsbeispiel der erfindungsgemäßen optischen Positionsmeßeinrichtung ist dabei in Verbindung mit einem Antrieb gezeigt, der zur präzisen Positionierung von relativ zueinander in einer Ebene beweglichen Bauelementen, beispielsweise in der Halbleiterfertigung, eingesetzt werden kann. Der Antrieb ist hierbei als Schrittmotor ausgebildet, der eine stationäre Antriebseinheit, d.h. eine Antriebs-Statoreinheit 1 sowie eine relativ dazu bewegliche Antriebseinheit 2 umfaßt. In einer vorteilhaften Ausführungsform ist die bewegliche Antriebseinheit 2 über geeignete Luftlager reibungsfrei auf der Antriebs-Statoreinheit 1 gelagert. Die Antriebs-Statoreinheit 1 wiederum ist in diesem Ausführungsbeispiel als Weicheisen-Stator ausgeführt, der auf einem Grundkörper 5 angeordnete, räumlich strukturierte Bereiche mit würfelförmigen Erhebungen 6 sowie dazwischen liegende Ausnehmungen 9 aufweist. Zur Erzeugung der Antriebsbewegung umfaßt die bewegliche Antriebseinheit 2 mehrere - nicht dargestellte - Erreger-Spulen, die in bekannter Art und Weise angesteuert werden, d.h. über die zeitlich definierte Anregung der Erreger-Spulen ist die schrittweise Positionierung des beweglichen Antriebsteiles 2 in der xy-Ebene möglich. Hierzu ist die bewegliche Antriebseinheit 2 über eine Verbindungsleitung 4 mit einer geeignet ausgebildeten Steuer- und Auswerte-Einheit 3 verbunden.
Zur gewünschten, hochauflösenden Positionsbestimmung des beweglichen Antriebsteiles 2 in der xy-Ebene ist in diesem Ausführungsbeispiel eine optische Positionsmeßeinrichtung vorgesehen, mit der verschiebungsabhängige Abtastsignale über eine Auflicht-Anordnung erzeugt werden. Hierbei wird von ein oder mehreren, in bekannter Art und Weise ausgebildeten Abtasteinheiten 10, die auf Seiten der beweglichen Antriebseinheit 2 angeordnet ist, eine Meßteilung 8 abgetastet, die der Antriebs-Statoreinheit 1 zugeordnet ist. In den Darstellungen der Figuren 1a und 1b ist lediglich eine einzige Abtasteinheit 10 auf Seiten des beweglichen Antriebseinheit 2 erkennbar; zur vollständigen Erfassung der Bewegung in der xy-Ebene inclusive der Bestimmung des Winkels ϕ, um den die bewegliche Abtasteinheit 2 um eine vertikale Achse verdreht werden kann, sind jedoch drei derartige Abtasteinheiten vorzusehen.
Die jeweiligen Abtasteinheiten 10 umfassen zu diesem Zweck eine Lichtquelle 11 sowie mindestens ein optoelektronisches Detektorelement 12, das die von der Meßteilung 8 zurückreflektierte Strahlung erfaßt. Hinsichtlich der Ausbildung der Abtasteinheit 10 existieren dabei vielfältige, bekannte Möglichkeiten, wie etwa zusätzlich geeignete Sendeoptiken, Abtastgitter, mehrere geeignet verschaltete Detektorelemente etc. vorzusehen.
Die in Reflexion bzw. Auflicht abgetastete Meßteilung 8 ist im dargestellten Fall der zweidimensionalen Bewegung der beweglichen Antriebseinheit 2 als Kreuzgitter ausgebildet, das in bekannter Art und Weise zur Gewinnung von inkrementalen Positionsinformationen abgetastet wird. Die Teilungsperioden der Meßteilung 8 sind im Fall der optischen Abtastung wie bereits erwähnt deutlich kleiner als die Periodizitäten der würfelförmigen Erhebungen 6, die z.B. über andere Abtastprinzipien zur Gewinnung der Positionsinformation abgetastet werden könnten. Sinnvolle Teilungsperioden der Kreuzgitter-Meßteilung 8 liegen im Bereich 1 ... 100µm. Im Fall einer 100-fachen Interpolation der resultierenden Abtastsignale ergibt sich damit eine mögliche Auflösung bei der Positionsbestimmung von 0,01 ...1µm.

Selbstverständlich ist die nachfolgend detailliert beschriebene Ausbildung der erfindungsgemäßen optischen Positionsmeßeinrichtung nicht auf den dargestellten Fall der Bewegung in zwei Dimensionen beschränkt, d.h. analog läßt sich auch ein Linear-Schrittmotor damit ausstatten, der lediglich eine Positionierung in einer Dimension ermöglicht. In diesem Fall kann dann beispielsweise auch auf die erwähnte Luftlager-Anordnung verzichtet werden und separate Führungen des beweglichen Antriebsteiles vorgesehen werden. Als Meßteilung wäre in diesem Fall dann eine bekannte eindimensionale, reflektierende Inkremental-Teilung einzusetzen mit einer in Meßrichtung periodischen Anordnung von Teilungsstrukturen.

Um ein Funktionieren des Schrittmotors auch in Verbindung mit der gewünschten Positionsbestimmung zu gewährleisten, ist nunmehr im dargestellten Ausführungsbeispiel erfindungsgemäß vorgesehen, den Teilungsträger 7 inclusive der darauf angeordneten Meßteilung 8 als integralen Bestandteil der Antriebs-Statoreinheit 1 auszubilden. Zu diesem Zweck werden die zwischen den Erhebungen 6 der Antriebs-Statoreinheit 1 befindlichen Ausnehmungen 9 mit einem Füllmaterial versehen, so daß eine plane Oberfläche der Antriebs-Statoreinheit 1 resultiert. Hinsichtlich des in diesem Ausführungsbeispiel verwendeten Füllmateriales für die Ausnehmungen 9 sind dabei bestimmte Anforderungen zu berücksichtigen. Zunächst muß das Füllmaterial nicht-magnetisch sein, um die Funktionsweise des Schrittmotors möglichst nicht zu beeinflußen. Zudem sollte das verwendete Füllmaterial die Herstellung einer möglichst planen Oberfläche der Antriebs-Statoreinheit 1 gewährleisten, sich also möglichst gut polieren lassen und nicht quellen.

Ferner sollte eine möglichst gute Haftung von ggf. darauf angeordneten Schichten sichergestellt sein. Desweiteren ist es vorteilhaft, wenn das eingesetzte Füllmaterial einen ähnlichen thermischen Ausdehnungskoeffizienten aufweist wie das umgebende Material der Antriebs-Statoreinheit 1. Als geeignetes Füllmaterial erweist sich unter diesen Anforderungen etwa Hartlot. Alternativ kann auch eine Füllung mit einem anderen, nichtmagnetischen Metall oder aber einem Kunststoff erfolgen.
Nach dem Ausfüllen der Ausnehmungen 9 mit einem geeigneten Füllmaterial kann je nach Planaritätsanforderung in einem anschließenden Bearbeitungsschritt ein Polieren der Oberfläche dieser Antriebseinheit erfolgen. Auf der möglichst planen Oberfläche der Antriebs-Statoreinheit 1 wird im dargestellten Ausführungsbeispiel daraufhin eine als Teilungsträger 7 dienende dünne Schicht aufgebracht. Beim Material des Teilungsträgers kann es sich z.B. um sogenanntes Spin-on-glas oder aber um sogenannte Sol-Gel-Materialien handeln, die in bekannter Art und Weise aufgebracht werden. Desweiteren kann als Teilungsträger z.B. auch eine dünne Metallschicht vorgesehen werden, etwa Cr. Die Dicke der als Teilungsträger 7 dienenden Schicht beträgt dabei wenige nm.
Auf dem Teilungsträger 7 wird anschließend die eigentliche Meßteilung 8 aufgebracht bzw. der Teilungsträger 7 strukturiert. Hierbei eignet sich im Fall einer im Auflicht abgetasteten Meßteilung 8 z.B. eine periodische Struktur mit reflektierenden Bereichen aus TiN und nichtreflektierenden Bereichen aus TiO₂. Alternativ wäre auch eine Strukturierung möglich, bei der auf einer nicht-reflektierenden CrO-Schicht reflektierende Bereiche aus Cr in angeordnet werden. Eine derartig aufgebaute Meßteilung 8 würde vorzugsweise auf dem als Cr-Schicht ausgebildeten Teilungsträger 7 angeordnet. Die eigentliche Strukturierung der unterschiedlichen Bereiche kann dabei etwa über bekannte Photolithographie-Techniken erfolgen.

Schließlich ist es alternativ auch möglich, den Teilungsträger als dünne Metallfolie auszubilden, die in bekannter Art und Weise strukturierbar ist, d.h. etwa mit den zur Stahlmaßband-Herstellung bekannten Techniken. Beispielsweise ist in diesem Zusammmenhang zur Strukturierung auch die Verwendung von Lasern möglich usw.. Die Metallfolie inclusive der darauf angeordneten Teilungstruktur kann anschließend auf die planarisierte Oberfläche der Antriebs-Statoreinheit aufgeklebt werden.

Im Gegensatz zum bloßen Anordnen einer Glasplatte eines kommerziellen Kreuzgitter-Meßsystems auf der Oberfläche der Antriebs-Statoreinheit 1 kann durch die erfindungsgemäßen Maßnahmen sichergestellt werden, daß der Abstand d zwischen den periodischen Strukturen des einen Antriebsteiles 1 und den Erreger-Spulen des anderen, beweglichen Antriebsteiles 2 nicht zu groß wird und eventuell keine Antriebsbewegung mehr erzeugbar ist. Die auf der planarisierten Oberfläche der Antriebs-Statoreinheit 1 angeordneten Schichten mit dem Teilungsträger 7 und der Meßteilung 9 weisen insgesamt eine Dicke in der Größenordnung von 1 µm auf. Damit ist gewährleistet, daß im beschriebenen Ausführungsbeispiel ein Zusammenwirken der Antriebs-Statoreinheit 1 mit der relativ dazu beweglichen Antriebseinheit 2 weiterhin möglich ist und derart eine definierte Relativbewegung zwischen den beiden Antriebseinheiten 1, 2 erzeugt werden kann.

Alternativ zur erläuterten Variante mit der periodischen Struktur auf Seiten der statorseitigen Antriebeinheit kann selbstverständlich in der gleichen Art und Weise die Antriebseinheit mit der periodischen Struktur als bewegliche Antriebseinheit eingesetzt werden. Der Teilungsträger inclusive Meßteilung ist in diesem Fall in der gleichen Art und Weise wie oben erläutert der beweglichen Antriebseinheit zugeordnet.

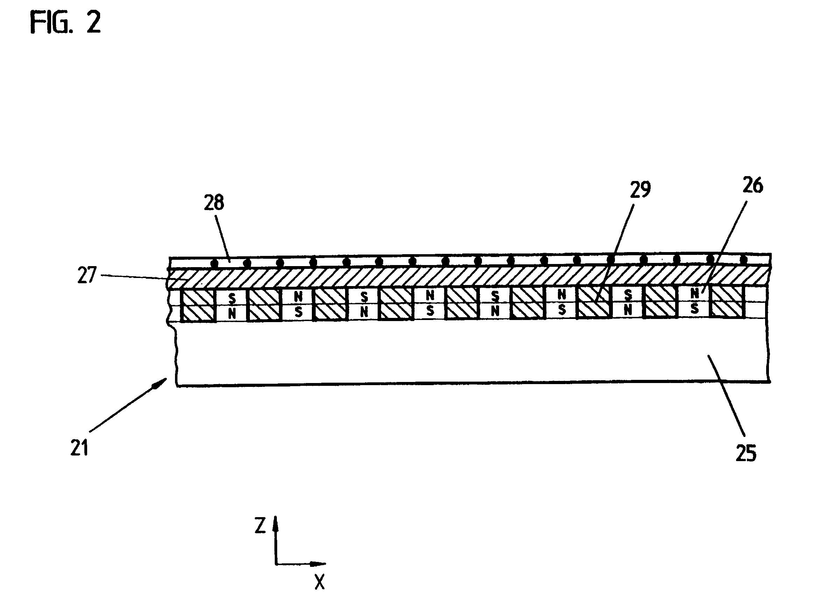

Eine zweite Ausführungsform einer Antriebs-Statoreinheit 21, die in der erfindungsgemäßen optischen Positionsmeßeinrichtung eingesetzt werden kann, ist in Figur 2 schematisiert dargestellt. Im Unterschied zum ersten beschriebenen Ausfürungsbeispiel ist eine andere periodische Struktur auf Seiten der Antriebs-Statoreinheit 21 vorgesehen, die in einem Permanentmagnet-Linearmotor zum Einsatz kommen kann. So sind auf einem Grundkörper 25 der Antriebs-Statoreinheit 21 in einem periodischen Muster analog zum ersten Ausführungsbeispiel quaderförmige Permanentmagneten 26 angeordnet, wobei in Figur 2 eine Anordnung mit unterschiedlichen Polaritäten der benachbarten Permanentmagnete 26 vorgesehen ist. Alternativ können diese Permanentmagnete auch allesamt in der jeweils gleichen Ausrichtung angeordnet werden. Die Erzeugung der Antriebsbewegung einer - nicht dargestellten - relativ hierzu beweglichen Antriebseinheit erfolgt in bekannter Art und Weise durch die entsprechende Ansteuerung von Erregerspulen in der jeweils anderen Antriebseinheit.
Wie im ersten Ausführungsbeispiel ist wiederum vorgesehen, die Ausnehmungen 29 zwischen den Permanentmagneten 26 mit einem Füllmaterial auszufüllen, so daß eine plane Oberfläche dieser Antriebseinheit 21 resultiert. Auf einer derart planarisierten Oberfläche wird anschließend eine als Teilungsträger 27 dienende Schicht aufgebracht, auf der wiederum die Meßteilung 28 angeordnet ist. Hinsichtlich der möglichen Ausbildung des Teilungsträgers 27, der Meßteilung 28 sowie zu den Anforderungen an das Füllmaterial sei auf die obigen Ausführungen verwiesen.

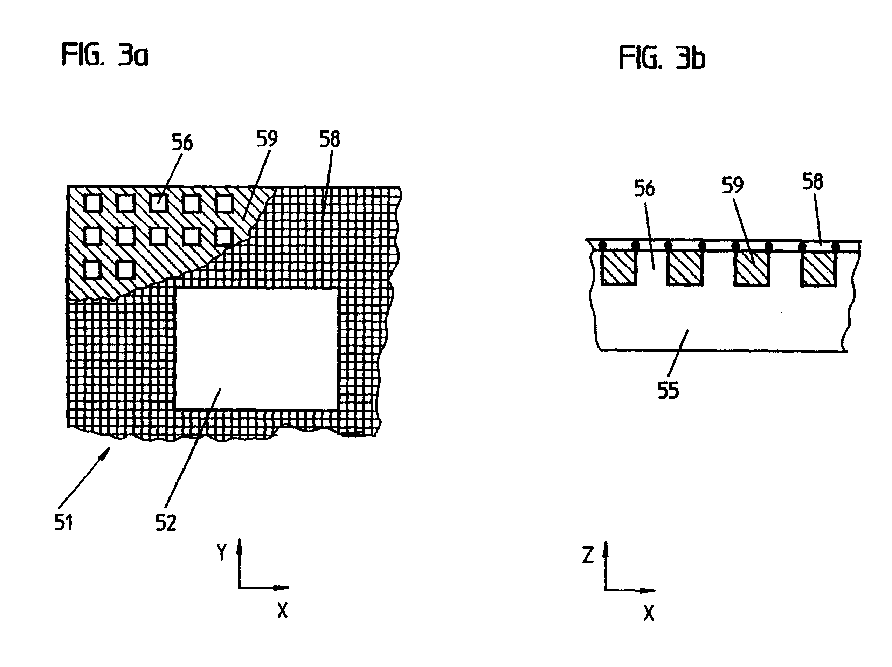

Eine weitere Ausführungsform der erfindungsgemäßen optischen Positionsmeßeinrichtung ist in zwei Teil-Ansichten in den Figuren 3a und 3b schematisiert dargestellt. Die Meßteilung 58 ist wiederum der stationären Antriebseinheit 51 zugeordnet, die analog zum ersten Ausführungsbeispiel eine periodische Struktur mit Erhebungen 56 und dazwischen liegenden Ausnehmungen 59 auf einem Grundkörper 55 aufweist, d.h. als Weicheisen-Stator ausgebildet ist. Nicht dargestellt ist die oberhalb der Antriebs-Statoreinheit 51 angeordnete, bewegliche Antriebseinheit mit den Erregerspulen sowie ein oder mehreren Abtasteinheiten, die zur Auflicht-Abtastung der Meßteilung 58 auf der Antriebs-Statoreinheit 51 dienen. Im Unterschied zu den beiden vorab erläuterten Ausführungsformen ist nunmehr vorgesehen, die als Kreuzgitter ausgebildete Meßteilung 58 als integralen Bestandteil der stationären Antriebseinheit 51 direkt auf der planen bzw. planarisierten derselben anzuordnen, d.h. auf einen separaten Teilungsträger zu verzichten.

Das Planarisieren der entsprechenden Oberfläche erfolgt wie vorab erläutert, d.h. durch Ausfüllen der Ausnehmungen 56 mit einem geeigneten Füllmaterial, beispielsweise Hartlot. Anschließend wird die Oberfläche noch poliert, bevor die eigentliche Strukturierung erfolgt, um die Meßteilung 58 aufzubringen. Hierbei kann die Meßteilung 58 wiederum aus periodisch angeordneten, reflektierenden und nicht-reflektierenden Bereichen bestehen wie etwa aus TiN/TiO₂ etc..
Alternativ zur dargestellten Variante kann die Meßteilung je nach Meßanforderungen auch nur in Teilbereichen der Oberfläche der Antriebs-Statoreinheit aufgebracht werden, beispielsweise nur auf den planen Oberflächen der Erhebungen usw..

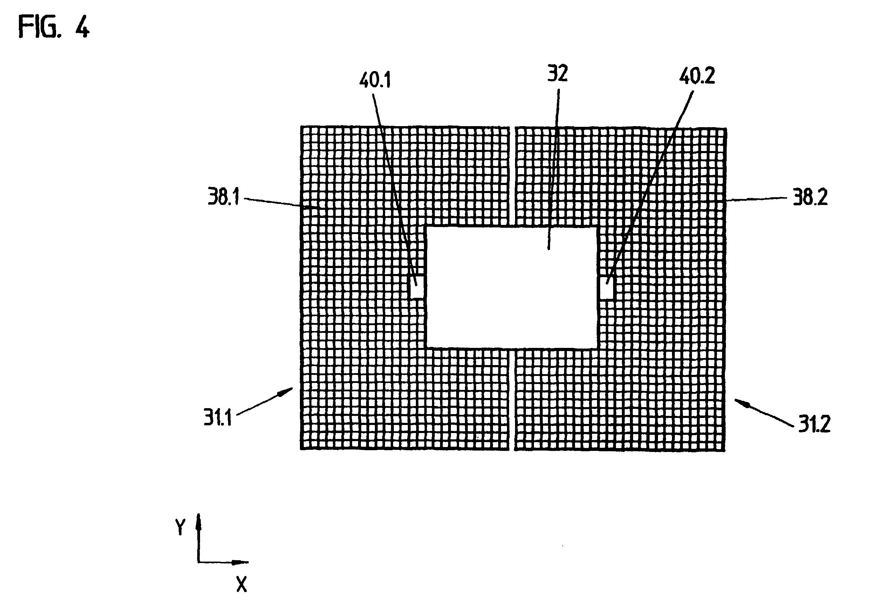

Eine spezielle, vorteilhafte Ausführungsform der erfindungsgemäßen optischen Positionsmeßeinrichtung ist in Figur 4 schematisiert dargestellt. Hierbei sind zwei separate Antriebs-Statoreinheiten 31.1, 31.2 gezeigt, die benachbart zueinander angeordnet sind. Der Aufbau der beiden Antriebs-Statoreinheiten 31.1, 31.2 entspricht demjenigen aus dem ersten beschriebenen Ausführungsbeispiel in Figur 1a und 1b, d.h. auf der Oberseite der Antriebs-Statoreinheiten 31.1, 31.2 ist jeweils als integraler Bestandteil derselben ein Kreuzgitter als Meßteilung 38.1, 38.2 angeordnet. Oberhalb der beiden Antriebs-Statoreinheiten 31.1, 31.2 ist die bewegliche Antriebseinheit 32 vorgesehen, die über Luftlager in der xy-Ebene positioniert werden kann. Die bewegliche Antriebseinheit 32 umfaßt im gezeigten Ausführungsbeispiel u.a. zwei Abtasteinheiten 40,1, 40,2, die an den beiden Querseiten der Antriebseinheit 32 angeordnet sind und mit denen eine optische Abtastung der Kreuzgitter-Meßteilungen erfolgt. Neben der Bestimmung der Verschiebebeträge in der xy-Ebene kann mit der dargestellten Anordnung auch eine Drehung der beweglichen Antriebseinheit 32 um eine in z-Richtung orientierte vertikale Achse detektiert werden.
Über dieses Ausführungsbeispiel soll verdeutlicht werden, daß auf Grundlage der vorliegenden Erfindung auch große Verfahrbereiche von beweglichen Antriebseinheiten bei derartigen Antrieben realisierbar sind und gleichzeitig die hochauflösende optische Positionsbestimmung möglich ist. Hierzu können mehrere kleinere Antriebs-Statoreinheiten, die allesamt in der beschriebenen Art und Weise aufgebaut sind, aneinandergereiht werden. Es ist demzufolge nicht erforderlich, eine einzige großflächige Antriebs-Statoreinheit inclusive großflächiger Meßteilung zu fertigen, vielmehr kann eine bestimmte Statorgröße eingesetzt werden, die je nach erforderlichem Verfahrbereich entsprechend oft aneinandergereiht wird.
Im gezeigten Ausführungsbeispiel der Figur 4 sind auf Seiten der beweglichen Antriebseinheit 32 zwei beabstandete Abtasteinheiten 40.1, 40.2 angeordnet, d.h. es ist kein Überfahren der Stoßstelle der aneinandergrenzenden Antriebs-Statoreinheiten 31.1, 31.2 mit einer der beiden Abtasteinheiten 40.1, 40.2 vorgesehen. Alternativ hierzu kann in einer weiteren Ausführungsform die bewegliche Antriebseinheit auch beim modularen Aufbau der Antriebs-Statoreinheit lediglich eine einzige Abtasteinheit umfassen, In diesem Fall wiederum resultieren bestimmte Anforderungen an die dann von der Abtatseinheit überfahrbare Stoßstelle, um auch an dieser Stelle eine exakte Positionsbestimmung zu gewährleisten. In einer ersten Variante kann durch hinreichend präzise Fertigung der Meßteilungen insbesondere im Bereich der Stoßstellen unmittelbar aneinandergrenzender Antriebs-Statoreinheiten sichergestellt werden, daß an dieser Stelle keine Fehlmessungen resultieren. Alternativ ist es in einer zweiten Variante mit lediglich einer einzigen Abtasteinheit möglich, zwischen den aneinandergrenzenden Antriebs-Statoreinheiten einen Abstand definierter Größe vorzusehen. Dieser definierte Abstand kann etwa beim Aufbau der gesamten Antriebs-Statoreinheit aus den einzelnen Modulen über eine geeignete optische Justiervorrichtung eingestellt werden. Auch derart läßt sich sichertellen, daß beim Überfahren der Stoßstellen mit der Abtasteinheit keine Fehler in der Positionsbestimmung resultieren.

Es ergeben sich somit auf Grundlage der erfindungemäßen Überlegungen eine Reihe von Ausführungsmöglichkeiten, die allesamt eine zuverlässige, hochauflösende, optische Positionsbestimmung in Verbindung mit verschiedenen Schrittmotor-Varianten gewährleisten.

## Patentansprüche

1. Optische Positionsmeßeinrichtung für einen Antrieb zur präzisen Positionierung, welcher zwei zueinander bewegliche Antriebseinheiten (1, 2; 21; 31.1, 31.2, 32; 51) umfaßt, wobei
- eine der beiden Antriebseinheiten (1; 21; 31.1, 31.2; 51) räumlich strukturierte Bereiche mit Erhebungen (6; 26) und dazwischen befindlichen Ausnehmungen (9; 29 ) umfaßt, die in ein oder zwei Dimensionen periodisch angeordnet sind und
- diese Antriebseinheit (1; 21; 31.1, 31.2; 51) eine Meßteilung (8; 28; 38.1, 38.2; 58) als integralen Bestandteil aufweist, die von einer mit der anderen Antriebseinheit (2; 32) verbundenen Abtasteinheit (10; 40.1, 40.2) zur Erzeugung von positionsabhängigen Ausgangssignalen abtastbar ist und
- die Meßteilung (8; 28; 38.1, 38.2; 58) auf einer als Teilungsträger (7; 27) dienenden Schicht auf einer planen Oberfläche der jeweiligen Antriebseinheit (1; 21; 31.1, 31.2) angeordnet ist, wobei die Dicke der als Teilungsträger (7; 27) dienenden Schicht inclusive der Meßteilung (8; 28; 38.1, 38.2) so gewählt ist, daß ein Zusammenwirken dieser Antriebseinheit (1; 21; 31.1, 31.2) mit der relativ dazu beweglichen anderen Antriebseinheit (10; 40.1, 40.2) möglich ist und
- zur Planarisierung der Oberfläche der Antriebseinheit (1; 21; 31.1, 31.2; 51) mit dem Teilungsträger (7; 27) und der Meßteilung (8; 28; 38.1, 38.2) die Ausnehmungen ((9; 29) mit einem Füllmaterial versehen sind, welches die Wechselwirkung der beiden Antriebseinheiten (1; 21; 31.1; 31.2; 10; 40.1; 40.2) nicht beeinträchtigt, die Herstellung einer planen Oberfläche der zugehörigen Antriebseinheit (1; 21; 31.1, 31.2) ermöglicht und ferner eine gute Haftung der darüber angeordneten Schichten sicherstellt.

2. Optische Positionsmeßeinrichtung nach Anspruch 1, wobei das Füllmaterial einen ähnlichen thermischen Ausdehungskoeffizienten aufweist wie das umgebende Material der Antriebs-Statoreinheit.

3. Optische Positionsmeßeinrichtung nach Anspruch 1, wobei als Material des Teilungsträgers (7; 27) Spin-on-Glas gewählt ist.

4. Optische Positionsmeßeinrichtung nach Anspruch 1, wobei als Material des Teilungsträgers (7; 27) ein Sol-Gel-Material gewählt ist.

5. Optische Positionsmeßeinrichtung nach Anspruch 1, wobei der Teilungsträger (7; 27) als dünne Metallfolie ausgebildet ist.

6. Optische Positionsmeßeinrichtung nach Anspruch 5, wobei die Metallfolie als Meßteilung reflektierende und nichtreflektierende Bereiche umfaßt.

7. Vorrichtung zur präzisen Positionierung eines in einer Ebene beweglichen Bauteiles, die zwei oder mehr benachbart angeordnete Antriebseinheiten (31.1, 31.2) mit einer optischen Positionsmeßeinrichtung gemäß Anspruch 1 umfaßt und eine relativ dazu bewegliche Antriebseinheit (32) mit mindestens einer Abtasteinheit (40.1, 40.2) aufweist, die zur optischen Abtastung der auf den anderen Antriebseinheiten (31.1, 31.2) angeordneten Meßteilungen (38.1, 38.2) ausgebildet ist.

8. Vorrichtung nach Anspruch 7, wobei die bewegliche Antriebseinheit (32) zwei beabstandete Abtasteinheiten (40.1, 40.2) aufweist.

9. Vorrichtung nach Anspruch 7, wobei die bewegliche Antriebseinheit eine einzige Abtasteinheit umfaßt, die Antriebseinheiten mit den darauf angeordneten Meßteilungen unmittelbar aneinandergrenzend angeordnet sind und die an den Stoßstellen aneinandergrenzenden Meßteilungen exakt aneinander anschließen.

10. Vorrichtung nach Anspruch 7, wobei wobei die bewegliche Antriebseinheit eine einzige Abtasteinheit umfaßt und die Antriebseinheiten mit den darauf angeordneten Meßteilungen mit einem definierten Abstand zueinander angeordnet sind.

## Claims

1. Optical position measuring device for a drive for precise positioning which comprises two drive units (1,2; 21; 31.1, 31.2, 32; 51) moveable relative to one another, wherein
- one of the two drive units (1; 21; 31.1, 31.2; 51) includes spatially structured regions having raised portions (6; 26) and recesses (9; 29) located between same, which are disposed periodically in one or two dimensions and
- this drive unit (1; 21; 31.1, 31.2; 51) has a measurement division (8; 28; 38.1, 38.2; 58) as an integral component which can be scanned by a scanner unit (10; 40.1, 40.2), connected to the other drive unit (2; 32), to create position-dependent output signals and
- the measurement division (8; 28; 38.1, 38.2; 58) is disposed on a layer serving as the division carrier (7; 27) on a planar surface of the respective drive unit (1; 21; 31.1, 31.2), the thickness of the layer serving as the measurement carrier (7; 27) including the measurement division (8; 28; 38.1, 38.2) being so selected that cooperation of this drive unit (1; 21; 31.1, 31.2) with the other drive unit (10; 40.1, 40.2), moveable relative thereto, is possible and
- in order to planarize the surface of the drive unit (1; 21; 31.1, 31.2; 51) with the division carrier (7; 27) and the measurement division (8; 28; 38.1, 38.2), the recesses (9; 29) are provided with a filler which does not impair the interaction of the two drive units (1; 21; 31.1, 31.2; 10; 40.1; 40.2), renders possible the production of a planar surface of the associated drive unit (1; 21; 31.1, 31.2) and furthermore ensures good adhesion of the layers disposed above same.

2. Optical position measuring device according to claim 1, wherein the filler has a similar coefficient of thermal expansion to that of the material surrounding the drive stator unit.

3. Optical position measuring device according to claim 1, wherein spin-on glass is selected as the material of the division carrier (7; 27).

4. Optical position measuring device according to claim 1, wherein a sol-gel material is selected as the material of the division carrier (7; 27).

5. Optical position measuring device according to claim 1, wherein the division carrier (7; 27) is configured as a thin metal foil.

6. Optical position measuring device according to claim 5, wherein the metal foil includes reflective and non-reflective regions as the measurement division.

7. Device for precisely positioning a component moveable in one plane and which includes two or more adjacent drive units (31.1, 31.2) of an optical position measuring device according to claim 1 and has a drive unit (32) which is moveable relative thereto with at least one scanner unit (40.1, 40.2) which is configured for optical scanning of the measurement divisions (38.1, 38.2) disposed on the other drive units (31.1, 31.2).

8. Device according to claim 7, wherein the moveable drive unit (32) has two scanner units (40.1, 40.2) at a spacing from one another.

9. Device according to claim 7, wherein the movable drive unit comprises a single scanner unit, the drive units with the measurement divisions disposed thereon are arranged directly adjacent to one another and the measurement divisions adjacent to one another at the impact points communicate exactly with one another.

10. Device according to claim 7, wherein the moveable drive unit comprises a single scanner unit and the drive units with the measurement divisions disposed thereon are arranged at a defined spacing from one another.

## Revendications

1. Dispositif optique de mesure de position pour un système actionneur de positionnement de précision comprenant deux unités d'actionneur (1, 2 ; 21 ; 31.1, 31.2, 32 ; 51) mobiles l'une par rapport à l'autre, dans lequel
- l'une des deux unités d'actionneur (1 ; 21 ; 31.1, 31.2 ; 51) comprend des zones structurées dans l'espace avec des reliefs (6 ; 26) et des creux (9 ; 29) entre les reliefs, dans une disposition périodique en une ou deux dimensions, et
- cette unité d'actionneur (1 ; 21 ; 31.1, 31.2 ; 51) présente une graduation de mesure (8 ; 28 ; 38.1, 38.2 ; 58) qui en fait partie intégrante et qui peut être explorée par une unité de balayage (10 ; 40.1, 40.2) reliée à l'autre unité d'actionneur (2 ; 32), en vue de la production de signaux de sortie qui sont fonction de la position, et
- la graduation de mesure (8 ; 28 ; 38.1, 38.2 ; 58) est disposée sur une couche, servant de support de graduation (7 ; 27), sur une surface plane de l'unité d'actionneur respective (1 ; 21 ; 31.1, 31.2), l'épaisseur de la couche servant de support de graduation (7 ; 27), y compris la graduation de mesure (8 ; 28 ; 38.1, 38.2), étant choisie de manière que cette unité d'actionneur (1 ; 21 ; 31.1, 31.2) puisse coopérer avec l'autre unité d'actionneur (10 ; 40.1, 40.2) mobile par rapport à cette dernière, et
- pour rendre plane la surface de l'unité d'actionneur (1 ; 21 ; 31.1, 31.2 ; 51) portant le support de graduation (7 ; 27) et la graduation de mesure (8 ; 28 ; 38.1, 38.2), les creux (9 ; 29) sont munis d'un matériau de remplissage qui n'affecte pas l'interaction des deux unités d'actionneur (1 ; 21 ; 31.1 ; 31.2 ; 10 ; 40.1 ; 40.2), qui permet la réalisation d'une surface plane sur l'unité d'actionneur associée (1 ; 21 ; 31.1, 31.2) et qui assure en outre une bonne adhérence des couches disposées au-dessus de cette surface.

2. Dispositif optique de mesure de position suivant la revendication 1, dans lequel le matériau de remplissage présente un coefficient de dilatation thermique semblable à celui du matériau qui l'entoure de l'unité statorique d'actionneur.

3. Dispositif optique de mesure de position suivant la revendication 1, caractérisé par le fait que le matériau du support de graduation (7 ; 27) est un matériau Spin-on-Glass.

4. Dispositif optique de mesure de position suivant la revendication 1, caractérisé par le fait que le matériau du support de graduation (7 ; 27) est un matériau sol-gel.

5. Dispositif optique de mesure de position suivant la revendication 1, caractérisé par le fait que le support de graduation (7 ; 27) est réalisé sous forme de feuille métallique mince.

6. Dispositif optique de mesure de position suivant la revendication 5, dans lequel la feuille métallique comprend des zones réfléchissantes et non réfléchissantes en tant que graduation de mesure.

7. Dispositif pour le positionnement précis d'un composant mobile dans un plan, qui comprend deux ou plus de deux unités d'actionneur (31.1, 31.2) voisines avec un dispositif optique de mesure de position suivant la revendication 1 et présente une unité d'actionneur (32) mobile par rapport auxdites unités avec au moins une unité de balayage (40.1, 40.2) conçue pour l'exploration optique des graduations de mesure (38.1, 38.2) disposées sur les autres unités d'actionneur (31.1, 31.2).

8. Dispositif suivant la revendication 7, dans lequel l'unité d'actionneur (32) mobile présente deux unités de balayage (40.1, 40.2) espacées.

9. Dispositif suivant la revendication 7, dans lequel l'unité d'actionneur mobile comprend une unique unité de balayage, les unités d'actionneur sont disposées de manière que les graduations de mesure disposées sur ces unités soient directement contiguës et les graduations de mesure contiguës aux emplacements de jonction se raccordent exactement les unes aux autres.

10. Dispositif suivant la revendication 7, dans lequel l'unité d'actionneur mobile comprend une unique unité de balayage et les unités d'actionneur avec les graduations de mesure disposées sur elles sont disposées à une distance réciproque définie.
